# EUROPEAN PATENT APPLICATION

(11) **EP 1 578 111 A1**
(43) Date of publication of application: **21.09.2005**
(21) Application number: 03774001.6
(22) Date of filing: 13.11.2003
(51) Int. Cl.: H04N 5/00

(54) **REMOTE CONTROL DEVICE AND PROGRAM RECEPTION SYSTEM**

(30) Priority: 13.11.2002 JP 2002329447
(71) Applicant: MATSUSHITA ELECTRIC INDUSTRIAL CO., LTD., Osaka 571-8501 (JP)
(72) Inventor: FUCHIKAMI, Tetsuji, Neyagawa-shi, Osaka 572-0055 (JP); HIRAYAMA, Kazuhiko, Toyonaka-shi, Osaka 560-0003 (JP)
(74) Representative: Grünecker, Kinkeldey, Stockmair & Schwanhäusser Anwaltssozietät
(86) International application number: PCT/JP2003/014415
(87) International publication number: WO 2004/045203

(57) **Abstract**

A program reception system comprises: a program selecting apparatus storing reception information, displaying program tables, and selecting a program according to signals from the remote controller or transmitting selected program's reception information; a wirelessly communicable remote controller; and a receiving/recording apparatus. The remote controller includes a recording medium, a user-operation receiving unit, a selecting unit for transmitting signals to select programs to the program selecting apparatus, a requesting unit for, upon a first operation, transmitting signals for requesting the selected-program' s reception information to the program selecting apparatus, a receiving unit for receiving and recording, onto the recording medium, the reception information, and a forwarding unit for, upon a second operation, transmitting the recorded reception information. With the second operation performed on the remote controller pointed toward the receiving/recording apparatus, the selected-program' s reception information is transmitted to the receiving/recording apparatus which, in response, receives and records the program.

## Description

### Technical Field

The present invention relates to a remote control apparatus that receives user operations and transmits signals for presetting receiving of broadcast programs to an apparatus operable to receive broadcasts.

### Background Art

Conventionally, remote control apparatuses have been supplied to serve as user interfaces to operate broadcast receiving apparatuses that are operable to receive broadcast programs or to receive and record broadcast programs, such as video tape recorders. Generally speaking, a remote control apparatus for controlling a broadcast receiving apparatus transmits remote control signals being infrared rays, according to user operations.

Normally, in order to preset a broadcast receiving apparatus to receive or record a broadcast program, the user refers to a program table appearing in a newspaper or a magazine so as to specify a program and inputs information such as the program broadcast date and time directly into the remote control apparatus or inputs a code in which such information is condensed into a small number of characters. Subsequently, the user points the infrared ray emitting unit of the remote control apparatus to the broadcast receiving apparatus and pushes the transfer button or such on the remote control apparatus so that a remote control signal is transmitted. As an example of codes to be used, the Gemstar code (the G-code) is publicly known. TheG-code is a registered trademark of Gemstar-TV Guide International, Inc. in the U. S. A.

In a case where a user takes information such as the broadcast date and time or reads a condensed code from a newspaper or a magazine and directly inputs such information or such a code, it is inconvenient for the user because he/she needs to obtain the newspaper or magazine, and also there is some possibility that the user is not able to preset receiving of a desired broadcast program due to an input error.

In order to solve these problems, in recent years, a system is provided which, when the user operates a remote control apparatus, displays a electronic program guide (hereafter it will be referred as an "EPG") on the screen of a digital television broadcast receiving apparatus so that the user is able to select a broadcast program from the EPG and to preset the digital television broadcast receiving apparatus to receive the selected broadcast program. Further, another system is also known in which, in a case where various types of devices for the purposes of program recording are connected through a network connection to the digital television broadcast receiving apparatus via IEEE 1394 cables and such, when the user operates a remote control apparatus, the user is able to have an EPG displayed on the screen of the digital television broadcast receiving apparatus and select a broadcast program, and subsequently a list of connected devices is displayed so that the user is able to select one of the connected devices and preset the selected device to record the selected broadcast program.

With the use of this system, however, it is not possible to preset a device to perform reception or recording if the device is not communicably connected to the digital television broadcast receiving apparatus on which an EPG is displayed.

### Disclosure of the Invention

An object of the present invention is to provide a remote control apparatus that makes it possible to preset an apparatus to perform reception with a simpler operation than directly inputting information such as a broadcast date and time, even if the apparatus is not operable to, although being operable to receive broadcast, communicate with a broadcast receiving apparatus that has an EPG displayed on a screen and is used for selection of a broadcast program via the remote control apparatus, as well as to provide a broadcast receiving system that includes such a broadcast receiving apparatus and such a remote control apparatus.

In order to achieve the object, the present invention provides a remote control apparatus that wirelessly communicates with a program selecting apparatus which stores therein pieces of reception information each of which is required for reception of a corresponding one of a plurality of programs, displays a program table, and in response to a signal transmitted from the remote control apparatus, either selects one of the plurality of programs or transmits one of the pieces of reception information that corresponds to a selected one of the programs, the remote control apparatus comprising: a recording medium; an operation receiving unit operable to receive a user operation from a user; a selecting unit operable to transmit a selective signal for selecting one of the programs according to the user operation to the program selecting apparatus; a requesting unit operable to, when a first user operation has been received, transmit, to the program selecting apparatus, a signal for requesting a piece of reception information that corresponds to the selected program; a reception information receiving unit operable to receive and record, onto the recording medium, the piece of reception information transmitted from the program selecting apparatus; and a forwarding unit operable to transmit, after a second user operation has been received, the piece of reception information recorded on the recording medium.

With this arrangement, the remote control apparatus makes the program selecting apparatus having a program table select one of the programs according to the user operation, and with the first user operation being a trigger, obtains a piece of reception information required for the reception of the selected program from the program selecting apparatus. With the second user operation being a trigger, the remote control apparatus transmits the piece of reception information. By configuring the remote control apparatus so that the first and second user operations are defined as simple operations such as, for example, pushing of the buttons provided on the remote control apparatus, when the user has the remote control apparatus obtain the piece of reception information of the selected program and performs the second user operation after moving the remote control apparatus to an appropriate position fromwhere the signals can reach the program receiving apparatus or the like which the user wishes to use for the preset reception of the program, the user is able to easily preset the program receiving apparatus to record the program without having to manually input the piece of reception information.

The remote control apparatus may comprise a transmitting unit operable to perform a transmission with directivity, wherein each of the transmissions performed by the selecting unit, the requesting unit, and the forwarding unit is performed via the transmitting unit.

With this arrangement, the user is able to precisely preset the program receiving apparatus to receive the program with simple operations such as changing the direction toward which the remote control apparatus is pointed. The simple operations may be, for example, while the user at first holds the remote control apparatus being pointed in an appropriate direction so that the remote control signals reach the program selecting apparatus, the user has the remote control apparatus obtain a piece of reception information for the desired program from the program selecting apparatus, and while the user secondly holds the remote control apparatus being pointed in an appropriate direction so that the remote control signals reach the program receiving apparatus which the user wishes to use for the preset reception of the program, the user performs the second user operation, i.e. the operation for having the piece of reception information transmitted.

It is further acceptable to have an arrangement wherein the transmitting unit performs each of the transmissions by transmitting an infrared ray.

With this arrangement, the user is able to precisely preset receiving of a program on a selecting apparatus located within sight or a program receiving apparatus or the like to which the user wishes to have the piece of reception information transmitted. In other words, there is no possibility that the user presets receiving of a program by mistake on a program receiving apparatus or the like which the user does not wish to use for the preset reception of the program and which is positioned at a place where the infrared rays do not reach when the second user operation is performed.

Further, it is acceptable to have an arrangement wherein the forwarding unit transmits the piece of reception information recorded on the recording medium to a program recording apparatus that is operable to, when having received a piece of reception information, receive and record a program that corresponds to the piece of reception information, the remote control apparatus further comprises a signal format storing unit that pre-stores therein signal format information which indicates, in correspondence with pieces of identification information for identifying a plurality of types of program recording apparatuses, a plurality of remote control signal formats which are to be used for a purpose of presetting recording of each program and which the plurality of types of program recording apparatuses are capable of receiving respectively, and the forwarding unit includes: an identification information obtaining unit operable to, when the second user operation has been received, transmit, via the transmitting unit, to the program recording apparatus to which the piece of reception information is to be transmitted, a signal for requesting a piece of identification information that identifies a type of the program recording apparatus, and to subsequently receive the piece of identification information from the program recording apparatus; a signal format specifying unit operable to specify a remote control signal format that corresponds to the type of program recording apparatus identified with the received piece of identification information, based on the signal format information; and an organizing unit operable to organize the piece of reception information so as to be in the specified remote control signal format and transmit the organized piece of reception information to the program recording apparatus.

With this arrangement, since the transmitted remote control signals are unique to the type of the program recording apparatus, in a case where there are a plurality of video tape recorders with a tuner that are capable of receiving signals in mutually different formats respectively due to the fact that these video tape recorders were made by mutually different manufacturers, it is possible to properly preset each of the video tape recorders to record a program.

It is further acceptable to have an arrangement wherein the program selecting apparatus receives and stores therein, for each of programs scheduled to be broadcasted, a piece of reception information broadcasted and a piece of program related information broadcasted and made up of items related to the program, and transmits a piece of program related information that corresponds to the selected program in addition to the piece of reception information, the remote control apparatus further includes a utilized item information storing unit that stores therein utilized item information which indicates, in correspondence with the pieces of identification information, one or more of the items which are within the pieces of program related information and can be utilized by each of the types of program recording apparatuses, the forwarding unit includes a utilized item specifying unit operable to specify one or more of the items within the pieces of program related information which can be utilized by the type of program recording apparatus identified with the received piece of identification information, based on the utilized item information, and the organizing unit extracts the one or more specified items out of pieces program related information recorded on the recording medium, organizes the extracted items and the piece of reception information so as to be in the specified remote control signal format, and transmits the organized items and piece of reception information to the program recording apparatus.

With this arrangement, the remote control apparatus is able to transmit, to a program recording apparatus having a function of recording a program name onto a recording medium, a program name in addition to information such as a broadcast date and time and a channel which are required for reception of the program and to have the program recording apparatus to record the program name as well.

It is also acceptable to have an arrangement wherein the operation receiving unit has an operational button, and the operation receiving unit regards a detection of the user pushing the operational button as that the first user operation has been received and regards a detection of the operational button becoming unpushed after the detection of a push as that the second user operation has been received.

With this arrangement, the user is able to have a piece of reception information transmitted and to preset receiving of a program simply by, firstly, pushing an operational button while the remote control apparatus is being pointed to the program selecting apparatus so that a piece of reception information of the program is obtained by the remote control apparatus, and, secondly, releasing the operational button while the remote control apparatus is being pointed to a program receiving apparatus which the user wishes to use for the preset reception of the program. Accordingly, from when the piece of reception information is obtained and until the piece of reception information is released, the user operating on only one button is sufficient.

It is further acceptable to have an arrangement wherein the remote control apparatus further includes an informing unit operable to, when the piece of reception information is recorded onto the recordingmediumby the reception information receiving unit, inform the user that the piece of reception information has been recorded.

With this arrangement, the user is able to find out at which point of time the user is allowed to release the operational button.

It is also acceptable to have an arrangement wherein every time the first user operation has been received, the requesting unit transmits, to the program selecting apparatus, the signal for requesting a piece of reception information that corresponds to a selected program, the reception information receiving unit receives and records, onto the recording medium, pieces of reception information that correspond to selected programs respectively and have been transmitted from the program selecting apparatus, and every time the second user operation has been received, the forwarding unit transmits one of the pieces of reception information recorded on the recording medium.

With this arrangement, the user is able to, at first, have the remote control apparatus obtain pieces of reception information for a plurality of programs from the program selecting apparatus and subsequently let the remote control apparatus release each piece of reception information toward an appropriate one of the program receiving apparatuses that the user wishes to use for the preset reception of the respective program. Accordingly, the user is able to efficiently perform operations in the case where the user wishes to preset receiving of each of the plurality of programs.

Further, it is acceptable to have an arrangement wherein the remote control apparatus further includes a recorded information displaying unit operable to display part or all of each of the pieces of reception information recorded on the recording medium in such a manner to be grouped in units of programs and arranged in a predetermined order, and every time the second user operation has been received, the forwarding unit selects and transmits one of the pieces of reception information, according to the predetermined order.

With this arrangement, after the user has the remote control apparatus obtain pieces of reception information for a plurality of programs, the user is able to preset a program receiving apparatus, which the user wishes to use for the preset reception of the programs, to receive the programs simply in the predetermined order, without having to perform the operation of selecting each of the programs.

It is also acceptable to have an arrangement wherein the remote control apparatus further includes: an option displaying unit operable to display part or all of each of the pieces of reception information recorded on the recording medium as options for selecting one ormore of the programs; and a selection receiving unit operable to receive a selection of one of the options by the user, and the forwarding unit transmits one of the pieces of reception information that corresponds to the selection that has been received by the selection receiving unit most recently when the second user operation has been received.

With this arrangement, regardless of in what order the user has the remote control apparatus obtain pieces of reception information for a plurality of programs, by simply selecting each of the programs in an arbitrary order and performing the second user operation, the user is able to preset receiving of each program on a program receiving apparatus that the user wishes to use.

Further, the present invention provides a program receiving system that includes a program selecting apparatus, a remote control apparatus, and a plurality of receiving apparatuses, wherein the program selecting apparatus includes:
a reception storing unit operable to receive and store therein pieces of reception information each of which is broadcasted and is required for reception of a corresponding one of a plurality of programs; a program table displaying unit operable to display a program table based on the received pieces of reception information; a program selecting unit operable to, when having received from the remote control apparatus, a selective signal for selecting one of the programs, select the one of the programs from the program table according to the selective signal; and a reception information transmitting unit operable to, when having received a request signal for requesting a piece of reception information from the remote control apparatus, transmit a piece of reception information that corresponds to the selected program to the remote control apparatus, the remote control apparatus includes: a recoding medium; an operation receiving unit operable to receive a user operation from a user; a selecting unit operable to wirelessly transmit, to the program selecting apparatus, the selective signal for selecting the program according to the user operation; a requesting unit operable to, when a first user operation has been received, wirelessly transmit, to the program selecting apparatus, the request signal for requesting the piece of reception information that corresponds to the selected program;
a reception information receiving unit operable to receive and record, onto the recording medium, the piece of reception information transmitted from the program selecting apparatus;
and a forwarding unit operable to, after a second user operation has been received, wirelessly transmit to one of the receiving apparatuses, the piece of reception information recorded on the recording medium, and each of the receiving apparatuses includes a program receiving unit operable to, when having received the piece of reception information from the remote control apparatus, receive a program that based on the piece of reception information.

With this arrangement, the remote control apparatus makes the program selecting apparatus having a program table select one of the programs according to the user operation, and with the first user operation being a trigger, obtains a piece of reception information required for the reception of the selected program from the program selecting apparatus. With the second user operation being a trigger, the remote control apparatus transmits the piece of reception information. By configuring the remote control apparatus so that the first and second user operations are defined as simple operations such as, for example, pushing of the buttons provided on the remote control apparatus, when the user has the remote control apparatus obtain the piece of reception information of the selected program and performs the second user operation after moving the remote control apparatus to an appropriate position from where the signals can reach the program receiving apparatus or the like which the user wishes to use for the preset reception of the program, the user is able to easily preset the program receiving apparatus to record the program without having to manually input the piece of reception information.

### Brief Description Of The Drawings

FIG. 1 is a schematic drawing of the configuration of a broadcast receiving system;
FIG. 2 is a functional block diagram of the remote control apparatus 100;
FIG. 3 is a functional block diagram of the program selecting apparatus 200;
FIG. 4 is a functional block diagram of a program receiving and recording apparatus 300;
FIG. 5 shows an example of the data structure of, and what is indicated in, a piece of program information;
FIG. 6 shows an example of the data structure of, and what is indicated in, a piece of type information;
FIG. 7 is a flow chart that shows the program preset recording processing performed by the remote control apparatus 100;
FIG. 8 is a flow chart that shows the program selection processing performed by the program selecting apparatus 200;
FIG. 9 is a flow chart that shows the preset recording receiving processing performed by the program receiving and recording apparatus 300;
FIG. 10 shows an example of what is displayed on the liquid crystal display 106;
FIG. 11 is a functional block diagramof the remote control apparatus 1100;
FIG. 12 is a functional block diagram of the program receiving and recording apparatus 1300;
FIG. 13 shows an example of the data structure of, and what is indicated in, a piece of program information 1510 to be stored in the program information storing unit 1132 within the remote control apparatus 1100;
FIG. 14 is a flow chart that shows the program preset recording processing performed by the remote control apparatus 1100; and
FIG. 15 is an example of what is displayed on a liquid crystal display of the remote control apparatus 1100.

### Best Mode for Carrying Out the Invention

The following describes program receiving systems according to embodiments of the present invention, with reference to the drawings.

### FIRST EMBODIMENT

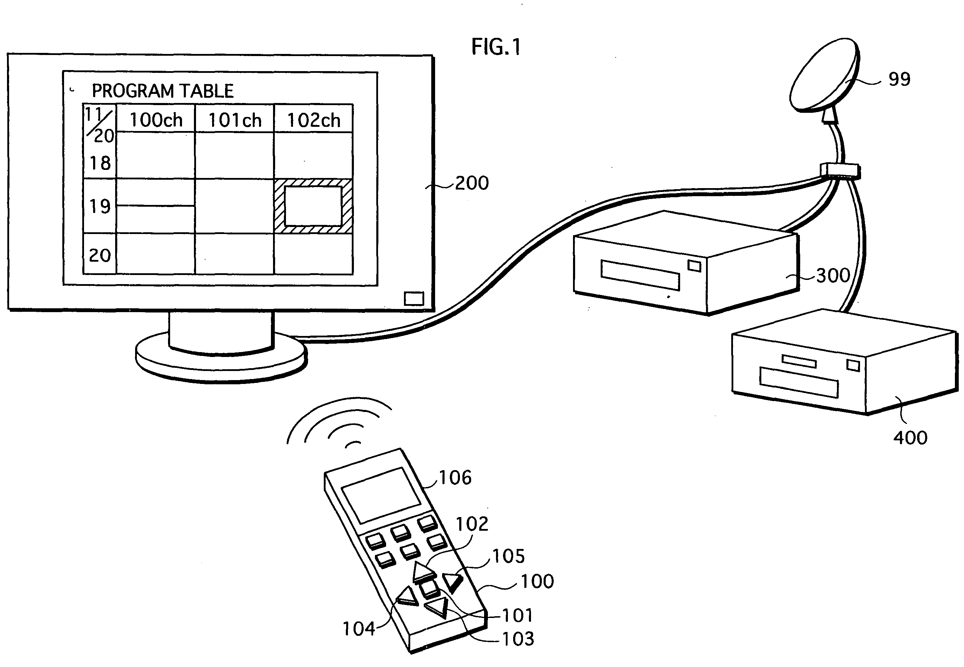

FIG. 1 is a schematic drawing of the configuration of a broadcast receiving system.

As shown in the drawing, the broadcast receiving system comprises: a remote control apparatus 100, a program selecting apparatus 200, a program receiving and recording apparatus 300, and a program receiving and recording apparatus 400.

Here, the remote control apparatus 100 is a so-called multi-functional remote controller and has, in terms of external appearance, a liquid crystal display 106 as well as buttons such as selective operational buttons 102 to 105 and a confirm button 101. The remote control apparatus 100 is operable to transmit remote control signals of infrared rays according to user operations, and to control individually, the program selecting apparatus 200, the program receiving and recording apparatus 300, and the program receiving and recording apparatus 400.

The program selecting apparatus 200 has a function of receiving television (TV) pictures, which is to receive digital TV broadcast via the antenna 99 and display TV programs. The program selecting apparatus 200 is operable to receive program information for Electronic Program Guide (EPG) being broadcasted in digital TV broadcast and to have the EPG displayed on a display screen.

Each of the program receiving and recording apparatus 300 and the program receiving and recording apparatus 400 is operable to receive and record TV broadcast via the antenna 99 and is, for example, a video tape recorder with a tuner, a DVD recorder with a tuner, or the like.

A feature of the program receiving system is that the user is able to, by operating the remote control apparatus 100, have a table of programs scheduled to be broadcasted (hereafter, it will simply be referred to as "a program table") displayed on the screen of the program selecting apparatus 200, and to select a desired program from the program table, and to preset the program receiving and recording apparatus 300 or 400 to receive/record the selected program. It should be noted that in this program receiving system, the program selecting apparatus 200 is not communicably connected with the program receiving and recording apparatus 300 or 400; therefore, the remote control apparatus 100 serves as a medium that transfers information regarding programs between those apparatuses.

The following describes more in detail the apparatuses that are included in the program receiving system.

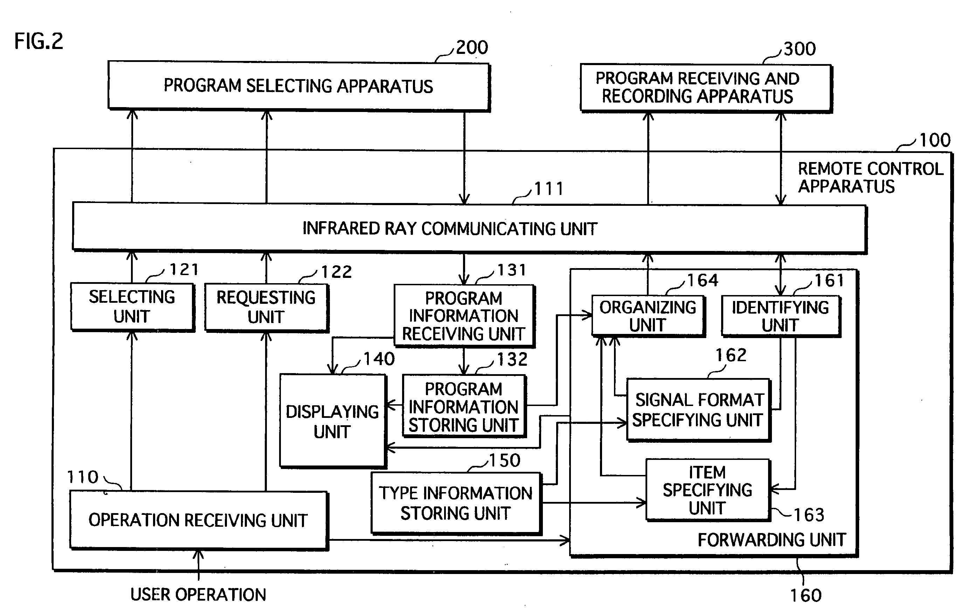

FIG. 2 is a functional block diagram of the remote control apparatus 100. It should be noted that the program selecting apparatus 200 and the program receiving and recording apparatus 300 are additionally shown in the drawing in order to show their relationship with the remote control apparatus 100.

The remote control apparatus 100 includes, in terms of hardware, buttons, a liquid crystal display, a CPU, a memory, a light emitting unit, and a light receiving unit, and in terms of functions, an infrared ray communicating unit 111, an operation receiving unit 110, a selecting unit 121, a requesting unit 122, a program information receiving unit 131, a program information storing unit 132, a displaying unit 140, a type information storing unit 150, and a forwarding unit 160, as shown in the drawing.

Here, the infrared ray communicating unit 111 has the light emitting unit, the light receiving unit, and a circuit for controlling these units, and is operable to transfer signals to the outside thereof via infrared rays and to receive signals by receiving infrared rays from the outside thereof. It should be noted that infrared ray signals are transmitted by the light emitting unit from an end of the body of the remote control apparatus 100 toward a range having a predetermined angle. Also, infrared ray signals are received by the light receiving unit from a range having an angle that is approximately equal to the predetermined angle in transmission.

The operation receiving unit 110 has buttons 101 to 105 and is operable to receive user operations via the buttons, and transfer signals indicating user operations to the selecting unit 121, the requesting unit 122, or the forwarding unit 160.

The selecting unit 121 is operable to, when having received from the operation receiving unit 110 a signal indicating that the user has pushed and released one of the selective operational buttons 102 to 105, in other words, that the user has performed the operation of pushing one of the buttons with a finger and taking the finger off the button, transfer a selection signal indicating a selective operation by a user to the program selecting apparatus 200, via the infrared ray communicating unit 111.

The requesting unit 122 is operable to, when having received from the operation receiving unit 110 a signal indicating that the user has pushed the confirm button 101, transfer a request signal indicating that a piece of program information is requested, to the program selecting apparatus 200 via the infrared ray communicating unit 111. The program information will be described in detail later.

The program information storing unit 132 is an area within a memory.

The program information receiving unit 131 is operable to receive, via the infrared ray communicating unit 111, a piece of program information transmitted from the program selecting apparatus 200 in response to a request from the requesting unit 122 for a piece of program information, to store the piece of program information into the program information storing unit 132, and to inform the displaying unit 140 that a piece of program information has been received.

The displaying unit 140 includes the liquid crystal display 106 and controlling mechanism for what is displayed thereon. The displaying unit 140 is operable to, when having been informed that a piece of program information has been received by the program information receiving unit 131, display the piece of program information stored in the program information storing unit 132.

The type information storing unit 150 is an area within a non-volatile memory and stores therein a piece of type information in which types of program receiving and recording apparatuses are shown in correspondence with pieces of information on interfaces. It should be noted that the type information will be described in detail later.

The forwarding unit 160 is, in principle, operable to transmit part of a piece of program information stored in the program information storing unit 132 to the program receiving and recording apparatus. As shown in FIG. 2, the forwarding unit 160 is structured so as to include an identifying unit 161, a signal format specifying unit 162, an item specifying unit 163, and an organizing unit 164.

The identifying unit 161 is operable to transmit a signal for requesting an ID that identifies a type of a program receiving and recording apparatus to the outside thereof via the infrared ray communicating unit 111, to receive, when an ID has been transmitted from the outside as an infrared ray signal, the ID via the infrared ray communicating unit 111, and to inform the signal format specifying unit 162 and the item specifying unit 163 of the ID. It should be noted that the program receiving and recording apparatuses each include a mechanism for receiving a signal for requesting the ID and transmitting the ID according to a method that is common to the different program receiving and recording apparatuses. The identifying unit 161 requests and receives an ID according to the common method.

The signal format specifying unit 162 is operable to specify a signal format that corresponds to the ID having been informed by the identifying unit 161, based on the piece of type information stored in the type information storing unit 150, and to inform the organizing unit 164 of the identified signal format. The item specifying unit 163 specifies items that correspond to the ID within the piece of program information based on the piece of type information and informs the organizing unit 164 of the specified items.

The organizing unit 164 is operable to arrange the items specified by the item specifying unit 163 within the piece of program information stored in the program information storing unit 132 (i.e. a piece of reception information) and other program related information that are necessary for receiving a program, so that the specified items fit the signal format specified by the signal format specifying unit 162, and to transmit the arranged items to the outside thereof via the infrared ray communicating unit 111.

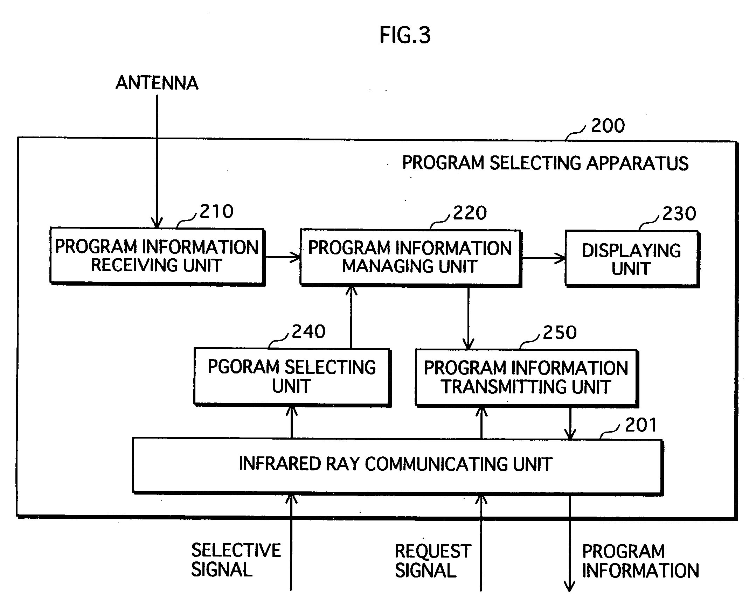

FIG. 3 is a functional block diagram of the program selecting apparatus 200.

The program selecting apparatus 200 includes, in terms of hardware, a tuner, a transport decoder, an AV decoder, a display device, a CPU, a memory, a light emitting unit, and a light receiving unit, and, in terms of function, an infrared ray communicating unit 201, a program information receiving unit 210, a program information managing unit 220, a displaying unit 230, a program selecting unit 240, and a program information transmitting unit 250.

Here, the infrared ray communicating unit 201 has the light emitting unit, the light receiving unit, and a circuit for controlling these units, and is operable to transfer signals to the outside thereof via infrared rays and to receive signals by receiving infrared rays from the outside thereof. It should be noted that infrared ray signals are transmitted by the light emitting unit from a side of the body of the program selecting apparatus being expected to face the user, toward a range having a predetermined angle. Also, infrared ray signals are received by the light receiving unit from a range having an angle that is approximately equal to the predetermined angle in transmission.

The program information receiving unit 210 includes a tuner for receiving digital broadcast, a modulating/demodulating unit, a transport decoder, and is operable to receive digital broadcast via the antenna 99, to extract a piece of program information, and transfer the piece of program information to the program information managing unit 220. The extraction of the piece of program information is triggered, for example, when a signal corresponding to a user operation to have a program table displayed is received from the remote control apparatus 100 via the infrared ray communicating unit 201, like in a conventional digital broadcast receiving TV, although that is not shown in the drawings.

It should be noted that digital broadcast is broadcasted in conformity to, for example, the MPEG 2 (Moving Picture Experts Group 2) System Standard, which is ISO (International Standards Organization)/IEC (International Electrical Committee) 13818-1 Standard, or the ARIB STD-B10 Standard, which is a standard by ARIB (Association of Radio Industries and Businesses) of Japan. A piece of program information of a program to be broadcast is included in an Event Information Table (EIT) within a piece of service information (SI), which is to be broadcasted while being multiplexed with video and audio that constitute the broadcast program. Thus, in order to obtain a piece of program information, the program information receiving unit 210 separates and extracts a transport packet that corresponds to the EIT from pieces of data being broadcasted and multiplexed, with the use of the transport decoder.

The program information managing unit 220 includes an area of a memory for storing therein pieces of program information and is operable to obtain the piece of program information transferred from the program information receiving unit 210 and to store the obtained piece of program information into the memory area.

The displaying unit 230 is operable to display, on a display screen, an EPG in a two-dimensional table format in which channels and broadcast periods are shown in segments, as illustrated in FIG. 1, based on the piece of program information stored in the program information storing unit 220.

The program selecting unit 24 0 is operable to, when having received a selective signal from the remote control apparatus 100 via the infrared ray communicating unit 201, select a program out of the programs indicated by pieces of program information stored in the program information managing unit 220, by changing a channel and a broadcast period to be focused on, depending on the selective signal, and to record a piece of selection information for specifying the selected program into a memory area within the program information managing unit 220. The displaying unit 230 is operable to display a cursor that reflects the piece of selection information and is superimposed on the EPG. For example, in the EPG illustrated in FIG. 1, the cursor is now at the position shown with oblique lines to indicate that the program broadcasted at or after 1900 hours on Channel 102 is selected. When the user has pushed and released the button 104, the program selecting unit 240 and the displaying unit 230 receives a corresponding selective signal from the remote control apparatus 100, and moves the cursor toward left so as to select the program broadcasted at or after 1900 hours on Channel 101.

It should be noted that, in principle, the program information receiving unit 210, the program information managing unit 220, the displaying unit 230, and the program selecting unit 240 have functions that are the same as the ones of a conventional digital broadcast receiving TV that is capable of displaying an EPG.

Additionally, when having received a request signal from the remote control apparatus 100 via the infrared ray communicating unit 201, the program information transmitting unit 250 is operable to transmit, based on the piece of selection information and pieces of program information in the memory area of the program information managing unit 220, a piece of program information related to the program being selected and specified, to the outside thereof via the infrared ray communicating unit 201. As a result of this transmission of the piece of program information to the outside, the piece of program information is transferred to the remote control apparatus 100 that has issued the request signal.

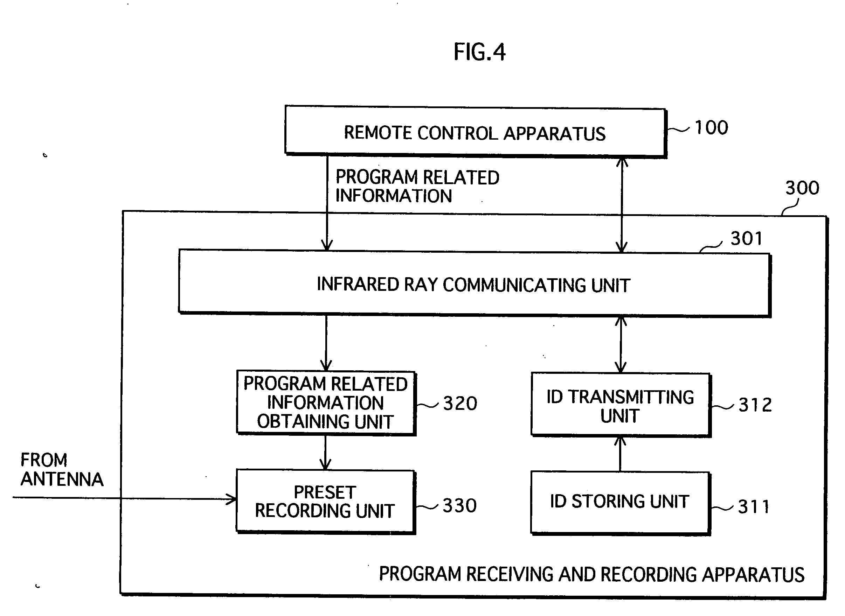

FIG. 4 is a functional block diagram of the program receiving and recording apparatus 300. It should be noted that the remote control apparatus 100 is additionally illustrated in the drawing in order to show the relationship between the program receiving and recording apparatus 300 and the remote control apparatus 100.

The program receiving and recording apparatus 300 includes, in terms of hardware, a broadcast receiving and recording mechanism that is basically equivalent to one in a conventional video tape recorder, DVD recorder or the like, as well as a CPU, a memory, a light emitting unit, a light receiving unit, and includes, in terms of functions, an infrared ray communicating unit 301, an ID storing unit 311, an ID transmitting unit 312, a program related information obtaining unit 320, and a preset recording unit 330.

Here, the infrared ray communicating unit 301 has the light emitting unit, the light receiving unit, and a circuit for controlling these units, and is operable to transfer signals to the outside thereof via infrared rays and to receive signals by receiving infrared rays from the outside thereof. It should be noted that infrared ray signals are transmitted by the light emitting unit from a side of the body of the program receiving and recording apparatus being expected to face the user, toward a range having a predetermined angle. Also, infrared ray signals are received by the light receiving unit from a range having an angle that is approximately equal to the predetermined angle in transmission.

The ID storing unit 311 is an area within a non-volatile memory that pre-stores therein an identifier (ID) for identifying the type of the external interface of the program receiving and recording apparatus. The ID is designated based on a premise that program receiving and recording apparatuses, for example video tape recorders with tuners, have different functions and interface specifications for remote control signals, depending on categories such as the manufacturer of the apparatus.

The ID transmitting unit 312 is operable to, when having received a signal for requesting the ID, from the remote control apparatus 100 via the infrared ray communicating unit 301, transmit the ID stored in the ID storing unit 311 to the outside thereof via the infrared ray communicating unit 301. As a result of this transmission of the ID to the outside, the ID is transferred to the remote control apparatus 100 that has issued the signal for requesting an ID.

The program related information obtaining unit 320 is operable to receive, from the remote control apparatus 100 via the infrared ray communicating unit 301, (i) a piece of reception information that is required for preset recording of a program, in other words, information such as a broadcast date, a channel number, and broadcast starting and ending times, as well as (ii) a piece of program related information which is other specified items out of a piece of program information, and to transfer those pieces of information to the preset recording unit 330.

The preset recording unit 330 includes a broadcast receiving and recording mechanism that is equivalent to one in a conventional video tape recorder or the like, and is operable to store the piece of reception information and the piece of program related information transferred from the program related information obtaining unit 320 into a memory or the like, and record a specified program based on the stored pieces of reception information and program related information, with the use of the broadcast receiving and recording mechanism, from the broadcast starting time to the broadcast ending time of the program.

It should be noted that the program receiving and recording apparatus 400 basically has the same configuration as the program receiving and recording apparatus 300; however, in the case where, for example, the program receiving and recording apparatus 300 has functions of a video tape recorder, and the program receiving and recording apparatus 400 has functions of a DVD recorder, they have mutually different IDs, and also, the recording methods used by their preset recording units and data to be recorded on recording media are mutually different.

### DATA

The following describes the data used in the program receiving system.

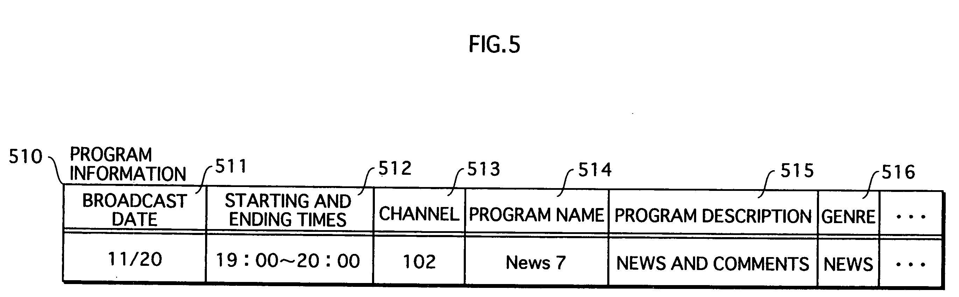

FIG. 5 shows an example of the data structure of, and what is indicated in, a piece of program information.

The program information 510 is a piece of information that is extracted from the EIT and formed by the program selecting apparatus 200 for a selected program, is transferred to the remote control apparatus 100, and is stored into the program information storing unit 132. As shown in the drawing, the program information 510 is structured so as to include the broadcast date 511, the starting and ending times 512, the channel 513, and the program name 514, the program description 515, and the genre 516.

Here, the broadcast date 511 shows the date on which the selected program is to be broadcasted. The starting and ending times 512 show the times at which the broadcast of the program starts and ends. The channel 513 shows the channel number on which the program is to be broadcasted. It should be noted that, when having obtained at least the broadcast date 511, the starting and ending times 512, and the channel 513, the program receiving and recording apparatus is capable of specifying a program that should be received and of receiving and recording the specified program.

The program name 514 is a character string that shows the program name of the selected program. The program description 515 is a character string that shows brief description of the program. The genre 516 is a piece of information that shows the type of the program, for example, a news program, a sports program, or a music program.

Generally speaking, an EIT includes information about the broadcast dates, the starting and ending times, and the channel numbers of the programs, the program names, and brief descriptions of the programs, as well as information about program signals such as image resolution levels and aspect ratios, information about the Conditional Access System, the genres of the programs, the age limit for the audience of the programs, and information on the copy rights.

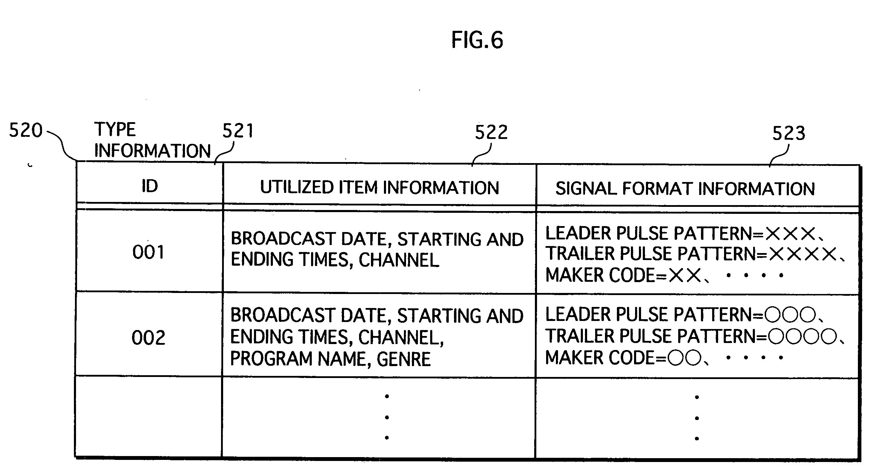

FIG. 6 shows an example of the data structure of, and what is indicated in, a piece of type information.

The type information 520 is stored in the type information storing unit 150 within the remote control apparatus 100. As shown in the drawing, for each ID 521, a piece of utilized item information 522 is shown in correspondence with a piece of signal format information 523.

Here, each ID 521 is an identifier (ID) for identifying the type of the external interface of a program receiving and recording apparatus. A predetermined value is assigned for each of different types of external interfaces.

Each of the pieces of the utilized item information 522 is information for identifying items out of a piece of program information that are utilized by a program receiving and recording apparatus identified with the corresponding ID 521. Each piece of utilized item information is indicated as values that specify items such as a broadcast date, starting and ending times included in a piece of program information shown in FIG. 5.

For example, when a program receiving and recording apparatus has only minimal functions of a conventional video tape recorder, the piece of utilized item information corresponding to the ID of the program receiving and recording apparatus includes only the broadcast date, the starting and ending times, and the channel of the program. When a program receiving and recording apparatus has a function of, for example, recording the program name and the genre of the program onto a recording medium, the piece of utilized item information corresponding to the ID of the program receiving and recording apparatus includes the program name and the genre of the program in addition to the broadcast date, the starting and ending times, and the channel of the program.

Each of the pieces of signal format information 523 is information for specifying a format of the remote control signals that the program receiving and recording apparatus identified with the corresponding ID 521 is capable of receiving. For example, a piece of signal format information 523 includes information about the basic length of the pulse of remote control signals, information for specifying the waveforms of the leader pulse and the trailer pulse that are to be sent before and after, respectively, the transmission of the substance to be sent as remote control signals, as well as a value indicating a maker code to be included in the remote control signals.

### OPERATIONS

The following describes the operations of the program receiving system which has the aforementioned configuration and in which the aforementioned kinds of data are used.

In response to a user operation of pushing and releasing a specific button for having a program table displayed, the remote control apparatus 100 transmits a signal indicating that a program table should be displayed, to the program selecting apparatus 200, and subsequently starts the program preset recording processing for presetting the recording of a program. It should be noted that when the user pushes and releases a specific button for having a program table displayed, while the portion of the body of the remote control apparatus 100 from which infrared rays emitted by the light emitting unit come out is pointed toward the program selecting apparatus 200, the program selecting apparatus 200 receives the signal indicating that a program table should be displayed. Accordingly, a program table is displayed on a display device as illustrated in FIG. 1.

First, the operation of the remote control apparatus 100 will be described.

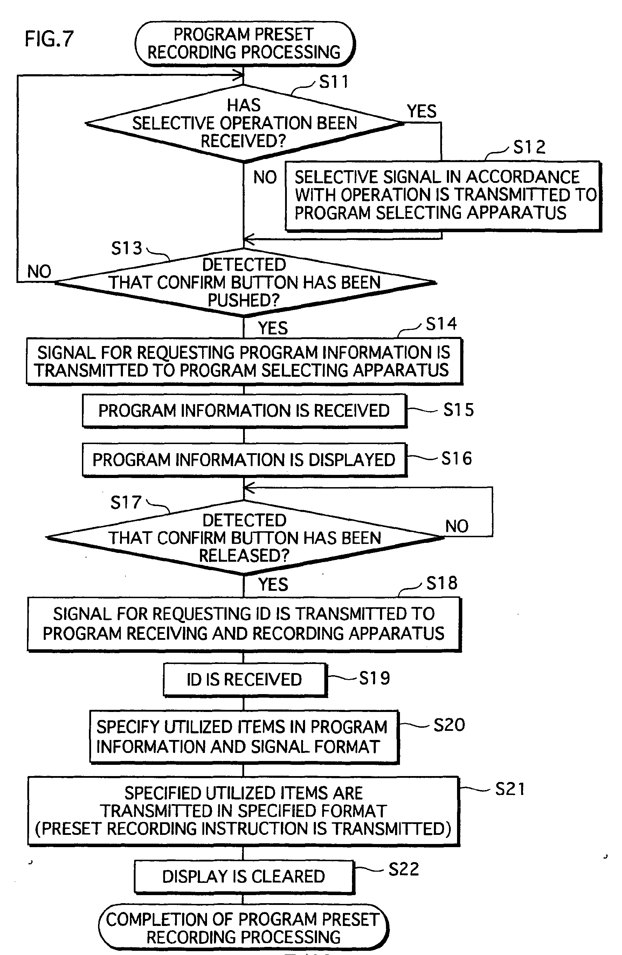

FIG. 7 is a flow chart that shows the program preset recording processing performed by the remote control apparatus 100.

When the operation receiving unit 110 within the remote control apparatus 100 has received a user operation of pushing and releasing one of the selective operational buttons 102 to 105 (Step S11), the operation receiving unit 110 informs the selecting unit 121 of the user operation. In response to this, the selecting unit 121 transmits a selective signal corresponding to the user operation to the program selecting apparatus 200 via the infrared ray communicating unit 111 (Step S12). For example, when the user has pushed the button 102, a selective signal that indicates a selection in the upward direction is transmitted. When the user has pushed the button 105, a selective signal that indicates a selection in the rightward direction is transmitted.

Subsequently, when the operation receiving unit 110 has received a user operation of pushing the confirm button 101 (Step S13), the operation receiving unit 110 informs the requesting unit 122 of the user operation. In response to this, the requesting unit 122 transmits a request signal to the program selecting apparatus 200 via the infrared ray communicating unit 111 (Step S14). It should be noted that until a push of the button 101 is received, the remote control apparatus 100 repeats the operation of transmitting a selective signal in response to an operation of pushing and releasing of one of the buttons 102 to 105 (Step S11 to S13).

Since the program selecting apparatus transmits a piece of program information in response to the request signal transmitted in Step S14, the program information receiving unit 131 within the remote control apparatus 100 receives, after Step S14 is performed, the piece of program information from the program selecting apparatus 200 via the infrared ray communicating unit 111 and stores the piece of program information into the program information storing unit 132 (Step S15). The displaying unit 140 displays a part of the piece of program information on the liquid crystal display 106 (Step S16).

After Step S16 is performed, the operation receiving unit 110 awaits to receive a user operation of releasing the confirm button 101 (Step S17). When the user operation of releasing is received, the operation receiving unit 110 informs the forwarding unit 160 of the user operation.

It should be noted that the user is required to go through the procedures as follows in order to preset one of a plurality of program receiving and recording apparatuses to record a program, with the use of the remote control apparatus 100:
The user points the remote control apparatus 100 toward an appropriate direction so that remote control signals reach the program selecting apparatus 200, and pushes and releases the selective operational buttons 102 to 105 in order to select a program for which the recording needs to be preset, from a program table. Also, after pushing the confirm button 101, the user needs to point the remote control apparatus 100 toward an appropriate direction so that the remote control signals reach the program receiving and recording apparatus on which the user desires to have the selected program recorded, and to release the confirm button 101. When a part of the piece of program information is displayed on the liquid crystal display 106 within the remote control apparatus 100 in Step S16, it is desirable that the user changes the direction of the remote control apparatus 100 from the one toward the program selecting apparatus to the other toward the program receiving and recording apparatus.

Having been informed by the operation receiving unit 110 that the user operation of releasing the confirm button 101 has been received, the forwarding unit 160 has the identifying unit 161 transmit a signal for requesting an ID to the program receiving and recording apparatus via the infrared ray communicating unit 111 (Step S18).

In response to the request for an ID transmitted in Step S18, the program receiving and recording apparatus that has received the signal transmits an ID. Thus, the identifying unit 161 within the remote control apparatus 100 receives, after Step S18 is performed, the ID of the program receiving and recording apparatus via the infrared ray communicating unit111, and informs the signal format specifying unit 162 and the item specifying unit 163 of the ID (Step S19).

Subsequent to Step S19, the signal format specifying unit 162 refers to the piece of type information 520 stored in the type information storing unit 150, and specifies a piece of signal format information that corresponds to the informed ID so as to inform the organizing unit 164 of the specified piece of signal format information. The item specifying unit 163 refers to the piece of type information 520 and specifies items out of the piece of program information that correspond to the informed ID so as to inform the organizing unit 164 of the specified items (Step S20).

Subsequent to Step S20, the organizing unit 164 extracts the items having been specified by the item specifying unit 163 out of the piece of program information stored in the program information storing unit 132, organizes the items into the format specified by the signal format specifying unit 162, and transmits an instruction to preset the recording of the program to the outside thereof via the infrared ray communicating unit 111 (Step S21).

It should be noted that the user needs to hold the remote control apparatus 100 pointing toward an appropriate direction so that the remote control signals reach the program receiving and recording apparatus on which the user desires to have the program recorded, for a period of time from before the confirm button 101 is released. Thus, the instruction to preset the recording of the program is transferred to the program receiving and recording apparatus.

Subsequent to Step S21, the displaying unit 140 stops displaying the piece of program information that has been displayed on the liquid crystal display 106 (Step S22). As a result of this, since the piece of program information disappears from the liquid cryptal display 106, the user is able to find out that the preset of the recording has been completed.

The following describes the operation of the program selecting apparatus 200.

The program selecting apparatus 200 receives digital broadcast via the program information receiving unit 210, sequentially separates and extracts EITs from a transport stream, and sequentially stores pieces of program information for different programs scheduled to be broadcasted, into the program information storing unit 220.

The program selecting apparatus 200 starts the program selection processing, which is triggered when the program selecting apparatus 200 has received a signal indicating that a program table should be displayed from the remote control apparatus 100.

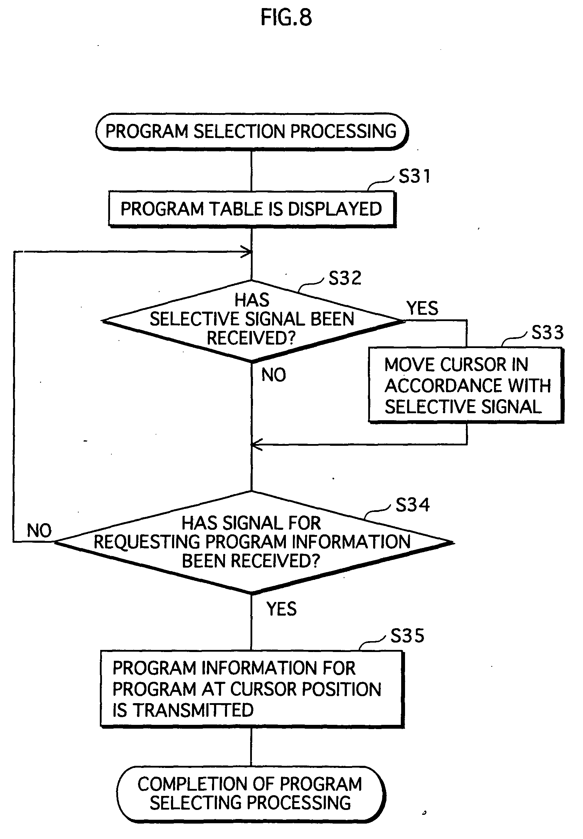

FIG. 8 is a flow chart that shows the program selection processing performed by the program selecting apparatus 200.

When the program selection processing has started, the program selecting apparatus 200 firstly has the displaying unit 230 form a program table and display the program table on a display device, based on the pieces of program information stored in the program information managing unit 220(Step S31).

Subsequently, when the program selecting unit 240 has received a selective signal from the remote control apparatus 100 via the infrared ray communicating unit 201 (Step S32), the program selecting apparatus 200 updates a piece of selection information stored in the program information managing unit 220 according to the selective signal, and the displaying unit 230 displays a cursor indicating, in the program table, the program currently being selected, so as to reflect the updated pieced of selection information (Step S33).

When having received from a remote control apparatus 100 via the infrared ray communicating unit 201 a request signal for requesting a piece of program information (Step S34), the program information transmitting unit 250 specifies the program at which the cursor is positioned i.e. the selected program, based on the piece of selection information, and extracts a piece of program information for the selected program from the program information managing unit 220, so as to transmit the piece of program information to the outside thereof via the infrared ray communicating unit 201 (Step S35).

It should be noted that the piece of program information transmitted in Step S35 is to be transferred to the remote control apparatus 100.

Finally, the following describes the operation of the program receiving and recording apparatus 300.

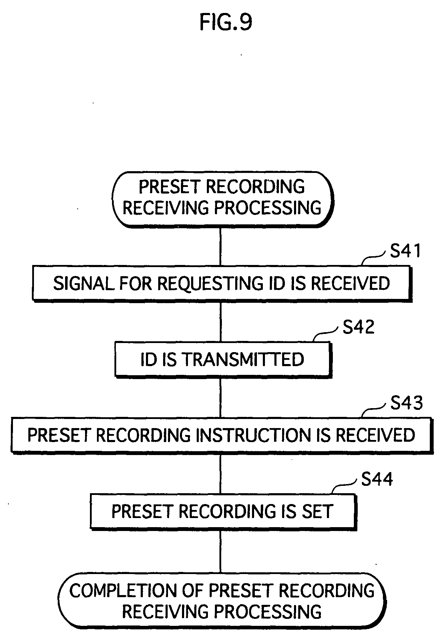

FIG. 9 is a flow chart that shows the preset recording receiving processing performed by the program receiving and recording apparatus 300. The preset recording receiving processing is performed also by the program receiving and recording apparatus 400 in the same manner.

When having received from the remote control apparatus 100 via the infrared ray communicating unit 301 a signal for requesting an ID (Step S41), the ID transmitting unit 312 within the program receiving and recording apparatus 300 transmits the ID stored in the ID storing unit 311 (Step S42).

Subsequently, the program related information obtaining unit 320 receives a preset recording instruction which includes a piece of reception information and a piece of program related information, in other words, receives a preset recording instruction that includes information in which all of the specified items, out of the items in the piece of program information, that are needed for the preset recording on the receiving and recording apparatus are included, via the infrared ray communicating unit 301 (Step S43), and transfers the piece of reception information and the piece of program related information to the preset recording unit 330.

Having received the piece of reception information and the piece of program related information, the preset recording unit 330 sets the preset recording by storing the piece of reception information and the piece of program related information into a memory or the like (Step S44). According to this setting, when it is time for the selected program to be broadcasted, the program receiving and recording apparatus 300 starts receiving and recording the program.

The following describes an example of utilization of the program receiving system.

Here, the description is provided on a premise that the program table illustrated in FIG. 1 is being displayed on the program selecting apparatus 200, after the user has operated the selective operational buttons and the like on the remote control apparatus 100 pointed toward the program selecting apparatus 200.

In the situation mentioned above, while the user keeps the confirmbutton 101 of the remote control apparatus 100 pushed with a finger (Step S13), a request signal for requesting a piece of program information is transmitted from the remote control 100 to the program selecting apparatus 200 (Step S14), a piece of program information that corresponds to the selected program to be broadcasted on Channel 102 starting at or after 1900 hours is transmitted from the program selecting apparatus 200 to the remote control apparatus 100, and the remote control apparatus 100 receives the piece of program information (Step S15). Part of the piece of program information is displayed on the liquid crystal display (Step S15).

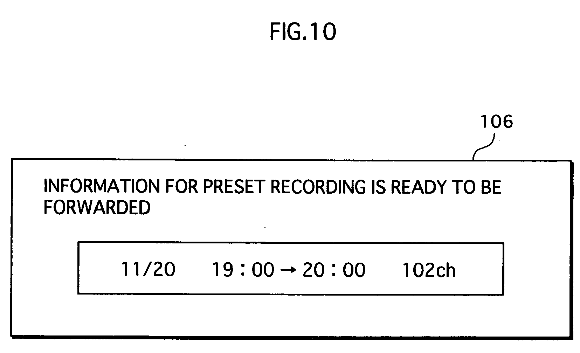

FIG. 10 shows an example of what is displayed on the liquid crystal display 106.

As a result of Step S15, the liquid crystal display 106 displays what is illustrated in FIG. 10, and the user is triggered, when having viewed the display, to point the remote control apparatus 100, while keeping the finger on the confirm button 101, toward a program receiving and recording apparatus on which the user desires to have the program recorded, and then takes the finger off the button. Here, the description will be continued on a presumption that the program receiving and recording apparatus 300 illustrated in FIG. 1 is the apparatus on which the user desires to have the selected program recorded.

When the user takes the finger off the confirm button 101 (Step S17), the remote control apparatus 100 transmits a signal for requesting an ID (Step S18), receives an ID from the program receiving and recording apparatus 300 that has received the signal (Step S19), and transmits a preset recording instruction that is in a format that suits the program receiving and recording apparatus 300 and that includes a piece of reception information being necessary information out of the piece of program information as well as a piece of program related information, to the program receiving and recording apparatus 300 (Steps S20 and S21). The remote control apparatus 100 then clears what is displayed on the liquid crystal display 106 (Step S23).

In correspondence with Step S21, the program receiving and recording apparatus 300 stores therein the piece of reception information and the piece of program related information according to the preset recording instruction, so as to be able to record the specified program.

Accordingly, the user is able to transfer, to the program receiving and recording apparatus 300 that is not communicably connected with the program selecting apparatus 200, information related to the program selected out of the EPG on the program selecting apparatus 200, using the remote control apparatus 100 as a medium, without having to directly and manually input the information needed for a preset recording into the remote control apparatus 100 and is able to easily have a desired program recorded on a desired apparatus.

### SECOND EMBODIMENT

### CONFIGURATION

The following describes a program receiving system of the second embodiment of the present invention.

The apparatuses that constitute the program receiving system of the second embodiment are, like the program receiving system of the first embodiment, a remote control apparatus, a program selecting apparatus, and a plurality of program receiving and recording apparatuses.

The program receiving system of the second embodiment is generally similar to the program receiving system of the first embodiment, except that the system is modified so that the remote control apparatus is able to obtain from the program selecting apparatus and store pieces of program information for different programs, according to a user operation, and the user is able to select each of the programs on the remote control apparatus and, when the remote control apparatus is being pointed toward the program receiving and recording apparatus on which the user desires to have the selected program recorded, the user is able to have the remote control apparatus transmit a piece of program information. In addition, in the second embodiment, unlike in the first embodiment, the plurality of program receiving and recording apparatuses use a signal format and a communication method that are in common among them in order to communicate with the remote control apparatus.

The following describes the constituent elements of the program receiving system of the second embodiment. It should be noted, however, that explanation will be omitted for the features that are the same as in the first embodiment.

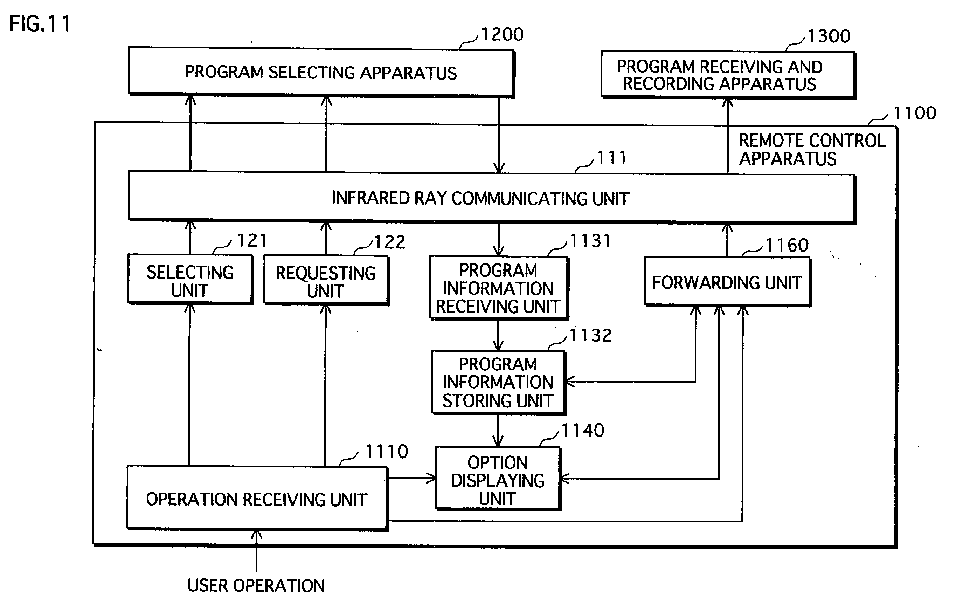

FIG. 11 is a functional block diagram of the remote control apparatus in the program receiving system of the second embodiment. It should be noted that the other constituent elements of the program receiving system, namely, the program selecting apparatus 1200 and the program receiving and recording apparatus 1300 are additionally illustrated in the drawing.

The remote control apparatus 1100 of the second embodiment includes, in terms of hardware, buttons, a liquid crystal display, a CPU, a memory, a light emitting unit, and a light receiving unit, and includes, in terms of functions, an infrared ray communicating unit 111, an operation receiving unit 1110, a selecting unit 121, a requesting unit 122, a program information receiving unit 1131, a program information storing unit 1132, an option displaying unit 1140, and a forwarding unit 1160. It should be noted that, in FIG. 11, some of the constituent elements of the remote control apparatus 1100 that are the same as in the remote control apparatus 100 described in the first embodiment are indicated with the same reference numbers as used in FIG. 2. Explanation on the same constituent elements will be omitted.

Here, the operation receiving unit 1110 has the buttons 101 to 105, like the operation receiving unit 110 described in the first embodiment does, and further has a button to be used in a forwarding operation, and is operable to receive user operations via the buttons, and to transfer signals indicating user operations to the selecting unit 121, the requesting unit 122, the option displaying unit 1140, or the forwarding unit 160. More specifically, when the user has pushed and released a specific button for having a program table displayed, and subsequently has pushed and released one of the selective operational buttons 102 to 105, the operation receiving unit 1110 is operable to inform the selecting unit 121 of those actions. When the user has pushed and released the confirm button 101 subsequently, the operation receiving unit 1110 is operable to inform the requesting unit 122 of the actions. When the user has pushed and released the button for a forwarding operation, the operation receiving unit 1110 is operable to inform the option displaying unit 1140 and the forwarding unit 1160 of the actions. When the user has pushed and released the selective operational button 102 or 104 and the confirm button 101, or the like, while options of pieces of program information are displayed on the liquid crystal display, the operation receiving unit 1110 is operable to inform the option displaying unit 1140 and the forwarding unit 1160 of those actions.

The program information storing unit 1132 is an area within a memory for storing therein a plurality of pieces of program information.

The program information receiving unit 1131 is operable to sequentially receive, via the infrared ray communicating unit 111, a piece of program information transmitted from the program selecting apparatus 1200 every time the requesting unit 122 requests for a piece of program information, and to store the received pieces of program information into the program information storing unit 1132.

The option displaying unit 1140 is operable to, when having been informed by the operation receiving unit 1110 that the button for a forwarding operation has been pushed and released, display the pieces of program information stored in the program information storing unit 1132 as options, or update the display with those pieces of information. The option displaying unit 1140 is further operable to, when having been informed by the operation receiving unit 1110 that the user has performed a selective operation of pushing and releasing a selective operational button, move the cursor indicating the selection on the liquid crystal display, according to the selective operation. When displaying pieces of program information as options, the option displaying unit 1140 displays specific items, including the program names, out of the pieces of program information, in order to make it easy for the user to identify each of the programs.

The forwarding unit 1160 is operable to, when the user has selected and confirmed one of the options displayed on the liquid crystal display after the operation receiving unit 1110 has informed that the user had pushed and released the button for a forwarding operation, in other words, when the operation receiving unit 1110 has informed that the user has pushed and released the confirm button 101 while the options are being displayed, specify the piece of program information that has been selected and confirmed, and to transmit a piece of reception information which is made up of items that are needed for recording the program such as broadcast date, the starting and ending times, the channel and the like, as well as other program related information, to the program receiving and recording apparatus 1300 via the infrared ray communicating unit 111.

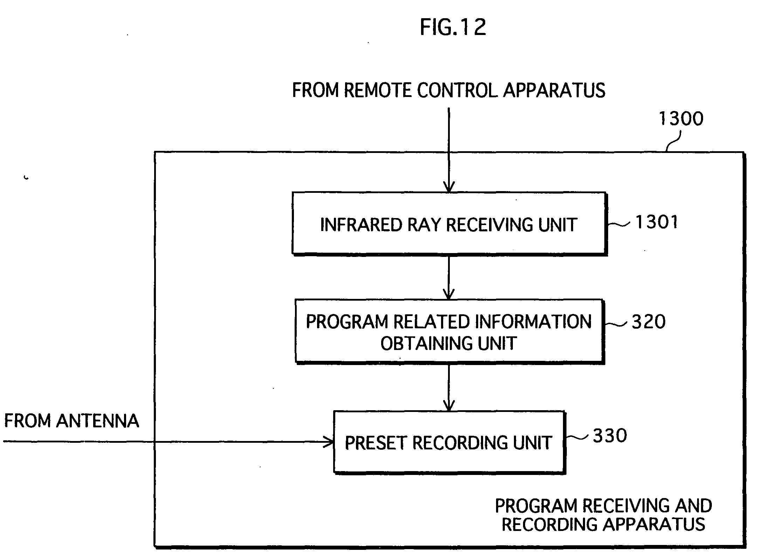

FIG. 12 is a functional block diagram of the program receiving and recording apparatus of the second embodiment.

As shown in the drawing, the program receiving and recording apparatus 1300 of the second embodiment includes an infrared ray receiving unit 1301, a program related information obtaining unit 320, and a preset recording unit 330.

Unlike the infrared ray communicating unit 301 of the first embodiment, the infrared ray receiving unit 1301 of the program receiving and recording apparatus 1300 does not have a light emitting unit. Thus, the program receiving and recording apparatus 1300 does not transmit signals to the outside thereof, but receives remote control signals of infrared rays from the remote control apparatus 1100 and performs operations according to the remote control signals.

As additional information, the program related information obtaining unit 320 of the program receiving and recording apparatus 1300 receives, via the infrared ray receiving unit 1301, the pieces of reception information and program related information included in a preset recording instruction transmitted from the remote control apparatus 1100, and transfers those pieces of information to the preset recording unit 330.

### DATA

The following describes data used in the program receiving system of the second embodiment.

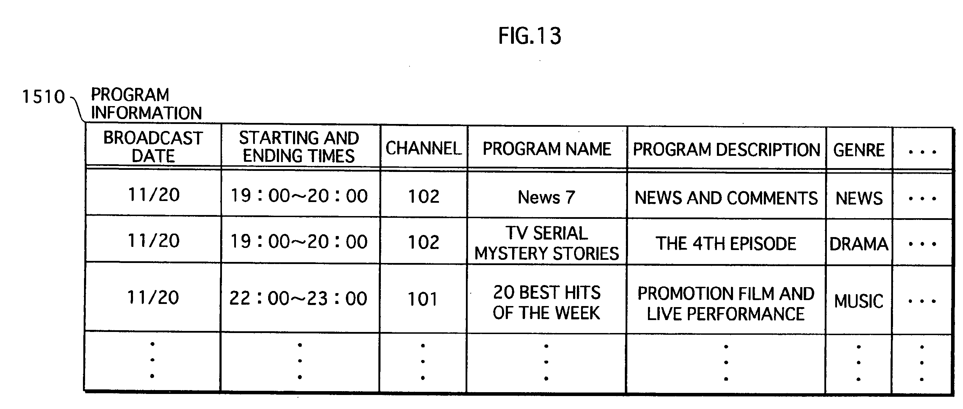

FIG. 13 shows an example of the data structure of, and what is indicated in, the program information 1510 to be stored in the program information storing unit 1132 within the remote control apparatus 1100.

The program information 1510 is a collective of pieces of program information for programs. The data structure of each piece of program information is similar to the one described in the first embodiment, except that, in the second embodiment, the remote control apparatus 1100 is operable to sequentially receive pieces of program information for a plurality of programs from the program selecting apparatus 1200, when the user repeatedly performs the operation on the selective operational buttons and the operation on the confirm button on the remote control apparatus more than once. Thus, the memory inside the remote control apparatus 1100 stores therein the plurality of pieces of program information for the plurality of programs, as illustrated in FIG. 13.

### OPERATIONS

The following describes the operations of the program receiving system of the second embodiment which has the aforementioned configuration and in which the aforementioned kinds of data are used. It should be noted that the program selecting apparatus 1200 operates in the same manner as the program selecting apparatus 200 of the first embodiment. Also, the program receiving and recording apparatus 1300 operates, in principle, in the same manner as a conventional video tape recorder with a tuner, or the like.

Accordingly, the following mainly describes the operations of the remote control apparatus 1100.

In response to a user operation of pushing and releasing a specific button for having a program table displayed, the remote control apparatus 1100 transmits a signal indicating that a program table should be displayed, to the program selecting apparatus 1200, and subsequently starts the program preset recording processing for presetting the recording of a program. It should be noted that when the user pushes and releases a specific button for having a program table displayed, while the portion of the body of the remote control apparatus 1100 from which infrared rays emitted by the light emitting unit come out is pointed toward the program selecting apparatus 1200, the program selecting apparatus 1200 receives a signal indicating that a program table should be displayed. Accordingly, a program table is displayed on a display device as illustrated in FIG. 1.

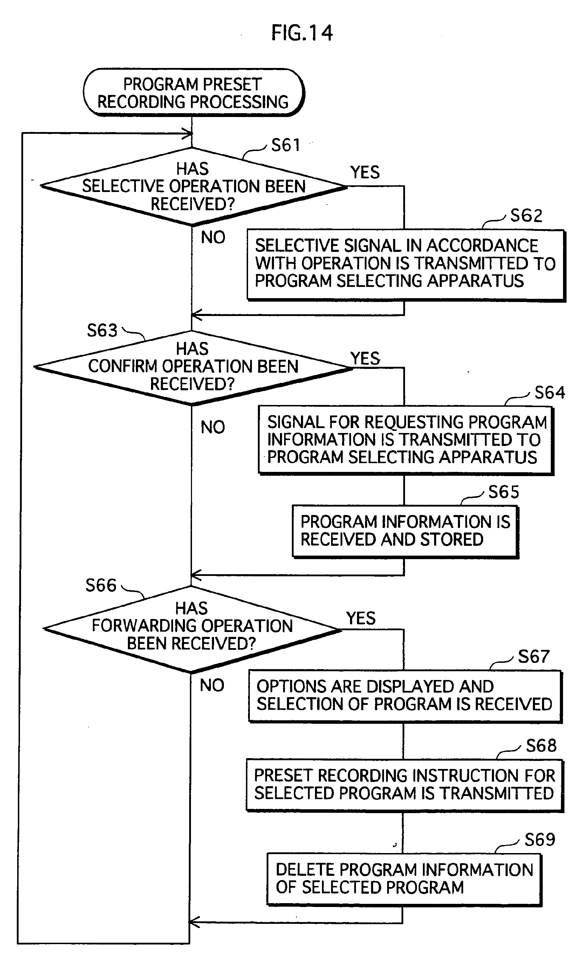

FIG. 14 is a flow chart that shows the program preset recording processing performed by the remote control apparatus 1100.

When the operation receiving unit 1110 within the remote control apparatus 1100 has received a user selective operation of pushing and releasing one of the selective operational buttons 102 to 105, while options of pieces of program information are not displayed on the liquid crystal display (Step S61), the operation receiving unit 1110 informs the selecting unit 121 of the user operation. In response to this, the selecting unit 121 transmits a selective signal corresponding to the user operation to the program selecting apparatus 1200 via the infrared ray communicating unit 111 (Step S62).

Subsequently, when the operation receiving unit 1110 has received a user operation of pushing and releasing the confirm button 101, while the options of the pieces of program information are not displayed on the liquid crystal display (Step S63), the operation receiving unit 1110 informs the requesting unit 122 that the user operation has been received. In response to this, the requesting unit 122 transmits a request signal to the program selecting apparatus 1200 via the infrared ray communicating unit 111 (Step S64).

Since the program selecting apparatus transmits a piece of program information in response to the request signal transmitted in Step S64, the program information receiving unit 1131 within the remote control apparatus 1100 receives, after Step S64 is performed, the piece of program information from the program selecting apparatus 1200 via the infrared ray communicating unit 111 and stores the piece of program information into the program information storing unit 1132 (Step S65).

Since there is a possibility that the operations in Steps S61 to 65 may be performed repeatedly, a plurality of pieces of program information can be stored in the program information storing unit 1132 as a result of Step S65.

When the operation receiving unit 1110 within the remote control apparatus 1100 has received a user operation of pushing and releasing the button for a forwarding operation, the operation receiving unit 1110 informs the option displaying unit 1140 and the forwarding unit 1160 of the actions (Step S66). In response to this, the option display unit 1140 displays the pieces of program information stored in the program information storing unit 1132 as options on the liquid crystal display, and when being informed, while being in such a state, by the operation receiving unit 1110 that the user has performed a selective operation, the option display unit 1140 moves the cursor on the liquid crystal display, according to the selective operation (Step S67). When being informed, while being in that state, by the operation receiving unit 1110 that the user has performed a confirm operation, the forwarding unit 1160 extracts information that is necessary for recording of the program and forms a piece of reception information and a piece of program related information, based on the confirmed piece of program information, and transmits the piece of reception information and the piece of program related information to the outside thereof via the infrared ray communicating unit 111 (Step S68). Then, the forwarding unit 1160 deletes the confirmed piece of program information from the program information storing unit 1132 (Step S69).

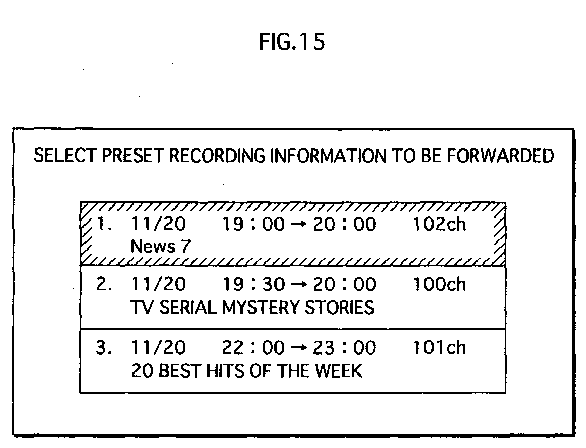

It should be noted that in Step S67 the liquid crystal display of the remote control apparatus 1100 shows what is illustrated in FIG. 15. FIG. 15 illustrates what is displayed on the liquid crystal display after the user has pushed and released the button for a forwarding operation on the remote control apparatus 1100, and is based on a premise that pieces of program information are sequentially transmitted from the program selecting apparatus 1200 in response to user operations on the remote control apparatus 1100 and that the pieces of program information 1510 illustrated in FIG. 13 are stored in the program information storing unit 1132.

In order to preset each of the program receiving and recording apparatuses to have a different one of the plurality of programs indicated by the pieces of program information with the use of the remote control apparatus 1100, the user needs to perform operations as follows:
The user points the remote control apparatus 1100 in an appropriate direction so that remote control signals reach the program selecting apparatus 1200, and pushes and releases the selective operational buttons 102 to 105 in order to select a program of which the user desires to preset the recording from a program table and also pushes and releases the confirm button 101. By performing these operations a number of times, the user is able to select a plurality of programs. Subsequently, the user pushes and releases the button for a forwarding operation on the remote control apparatus 1100. In response to this operation, options illustrated in FIG. 15 are displayed on the liquid crystal display of the remote control apparatus 1100. The user adjusts the direction of the remote control apparatus 1100 so that the remote control signals reach one of the program receiving and recording apparatuses by which the user desires to have one of the options of the programs recorded. Then, the user performs the operation to select the program, in other words, pushes and releases the confirm button 101.

Further, when the user desires to have another program having already been selected from the program table recorded by another program receiving and recording apparatus, the user again pushes and releases the button for a forwarding operation on the remote control apparatus so that options are displayed on the liquid crystal display. The user adjusts the direction of the remote control apparatus 1100 so that the remote control signals reach the program receiving and recording apparatus by which the recording should be performed, and pushes and releases the confirm button 101.

Accordingly, after selecting a plurality of programs with the remote control apparatus 1100 pointed toward the program selecting apparatus 1200, and having the pieces of program information for those programs stored in the remote control apparatus 1100, the user is able to, by performing simple operations, preset any of the program receiving and recording apparatuses to record each of the programs of which the pieces of program information are stored.

For example, when the user points the remote control apparatus 1100 toward one of the program receiving and recording apparatuses and operates the buttons while the options illustrated in FIG. 15 are displayed on the remote control apparatus 1100, the user is able to preset the particular program receiving and recording apparatus to record the program called "News 7" on Channel 102 from 1900 hours to 2000 hours on November 20. Subsequently, when the user points the remote control apparatus 1100 toward another program receiving and recording apparatus and operates the buttons, the user is able to preset this particular program receiving and recording apparatus to record the program called "TV Serial Mystery Stories" on Channel 100 from 1930 hours to 2000 hours on November 20.

### SUPPLEMENTARY INFORMATION

The program receiving systems and the remote control apparatuses of the present invention have been described above according to the first and the second embodiments; however, the present invention is not limited to these embodiments. The following explains modification examples of the embodiments.
(1) In the first and the second embodiments, the transmission and reception of signals among the program selecting apparatus, the program receiving and recording apparatuses, and the remote control apparatus are performed through communication with the use of infrared rays; however, the present invention is not limited to this arrangement. It is acceptable to perform the transmission and reception of signals through wireless communication with the use of radio waves. The wireless communication may have directivity. Alternatively, the wireless communication may have no directivity and be of a type in which somewhat weak radio waves are transmitted omnidirectionally. It should be noted, however, that when a wireless communication method without directivity is used, it is necessary to move the remote control apparatus body to a position in the vicinity of a program selecting apparatus or a program receiving and recording apparatus with which the user wishes the remote control apparatus to establish communication, so that the remote control apparatus communicates only with the targeted apparatus.
(2) In the first and the second embodiments, the program receiving and recording apparatus has a broadcast receiving and recording mechanism, and also the remote control apparatus transmits a preset recording instruction, so that it is possible to preset the program receiving and recording apparatus to record the program selected on the program selecting apparatus; however, it is acceptable to have an arrangement wherein the apparatus is preset to receive the program, instead of to record the program. In such a case, it is acceptable to have an arrangement wherein, instead of a program receiving and recording apparatus, a program receiving apparatus, like a TV, that has no program recording mechanism is used as a constituent element of the program receiving system. In such a program receiving system, the user is able to easily preset a program receiving apparatus to receive a program with the use of a piece of program information obtained by the remote control apparatus from a program selecting apparatus.
   In addition, the programs to be shown in a program table and to be recorded on a program receiving and recording apparatus are not limited to TV programs. It is acceptable that the programs are radio programs.
(3) It is acceptable to have an arrangement wherein when the remote control apparatus of the first or the second embodiment has received a piece of program information from a program selecting apparatus, if the piece of program information includes copy right information that indicates the recording of the program is prohibited, the liquid crystal display shows that the presetting of the recoding is not possible, and also execution of the processing is inhibited, the processing being to transmit pieces of reception information and program related information to the program receiving and recording apparatus.
(4) In the first and second embodiments, the program selecting apparatus obtains a piece of program information from an EIT and transmits the piece of program information to the remote control apparatus; however, it is acceptable to have an arrangement wherein the program selecting apparatus is operable to connect to the Internet and obtain pieces of program information for the programs scheduled to be broadcasted from the Internet, and transmit the pieces of program information to the remote control apparatus. Further, the programs shown in a program table displayed on the program selecting apparatus do not necessarily have to be programs of digital broadcast. It is acceptable that the programs are programs of so-called analog broadcast. The plurality of program receiving and recording apparatuses do not have to be connected to a same antenna.
(5) The first embodiment describes a program receiving system that can be applied to the case where the specifications of the external interfaces of a plurality of program receiving and recording apparatuses constituting the program receiving system are largely different from one another; however, in the case where a program receiving system is constituted only with a plurality of apparatuses of which the specifications of the external interfaces are in common, it is acceptable to omit a mechanism used for transmission and reception of IDs from the remote control apparatus and the program receiving and recording apparatuses, as described in the second embodiment.
   Further, the program receiving system described in the second embodiment is expected to include a plurality of program receiving and recording apparatuses of which the specifications of the external interfaces are in common; however it is acceptable to modify the program receiving system like the one in the first embodiment so that a mechanism for transmission and reception of IDs is provided.
(6) In the first embodiment, a piece of reception information which is needed for reception of a program is also included in a piece of utilized item information within the type information 520; however, it is acceptable to have an arrangement wherein the type information includes only a piece of program related information which, besides the reception information, can be used for the recording of the program. In such a case, the organizing unit 164 specifies a piece of program related information by referring to the type information and extracts, from the piece of program information, and transmits the specified piece of program related information and the piece of reception information. It should be noted that depending on the type of program receiving and recording apparatus, the items that constitute a piece of program related information are different from one apparatus to another, based on the differences in their functions.
(7) In the first embodiment, the user is required to change the direction of the remote control apparatus 100, while the confirm button 101 provided on the remote control apparatus 100 is being pushed, from the one toward the program selecting apparatus to the other toward the desired program receiving and recording apparatus; however, it is acceptable to have an arrangement wherein the remote control apparatus 100 transmits a request signal for requesting a piece of program information in response to pushing or releasing of the confirm button 101, and further, that the remote control apparatus 100 transmits and receives IDs to and from a program receiving and recording apparatus as well as transmits a preset recording instruction to the program receiving and recording apparatus, in response to a push of another specific button.
(8) In the first embodiment, when the remote control apparatus has obtained a piece of program information, part of the piece of program information is displayed on the liquid crystal display; however, it is acceptable to use some other methods to notify the user that a piece of program information has been taken into the remote control apparatus. The methods of notification include, for example, to turn on a light emitting diode or the like, to make a sound, and to vibrate the body of the remote control apparatus.
(9) It is acceptable to have an arrangement wherein the type information described in the first embodiment can be inputted thereto from an external source.
(10) In the second embodiment, in the remote control apparatus 1100, the button used for selecting a program from a programtable of the program selecting apparatus and confirming the selection is the same button as the button used for selecting one of the options of the pieces of program information displayed on the liquid crystal display included in the remote control apparatus itself and confirming the selection; however, it is acceptable to have an arrangement that different buttons are provided for those purposes.
(11) In the second embodiment, after the remote control apparatus 1100 has obtained pieces of program information for a plurality of programs, those pieces of program information for the programs are displayed as options on the liquid crystal display so that the user is able to select one of the options; however, it is acceptable to have an arrangement wherein the user is not able to select the programs related to the pieces of program information sequentially obtained from the program selecting apparatus and stored in the remote control apparatus, but every time the user performs a specific operation, the remote control apparatus specifies a program according to the order in which the pieces of program information have been obtained, and transmits a preset recording instruction for the specified program to the program receiving and recording apparatus.
   Further, in the second embodiment, the remote control apparatus 1100 displays options on the liquid crystal display; however, there is no limitation to the order in which the options are displayed. It is acceptable that the pieces of program information are arranged sequentially starting from the one that has received earliest. Alternatively, it is acceptable that the pieces of program information are arranged sequentially starting from the one whose broadcast starting date and time is the earliest. Further, it is acceptable to have an arrangement wherein every time the user performs a specific operation, the remote control apparatus specifies a program based on the order in which the pieces of program information are arranged in the display and transmits a preset recording instruction for the specified program to the program receiving and recording apparatus.
(12) In the second embodiment, after a piece of program information is selected from the options and a preset recording instruction is issued, the piece of program information is deleted from the memory area; however, it is acceptable to have an arrangement wherein the piece of program information will not be deleted until a specific user operation indicating deletion is performed. With this arrangement, the user is able to preset a plurality of program receiving and recording apparatuses to record a same program, by selecting the same program repeatedly and issuing preset recording instructions.
(13) In the second embodiment, the pieces of program information are transmitted from the program selecting apparatus 1200 to the remote control apparatus 1100 at different times, according to the user operations on the remote control apparatus 1100; however, it is acceptable to have an arrangement wherein after the remote control apparatus 1100 transmits a plurality of pieces of information according to user operations to select a plurality of programs to the program selecting apparatus 1200, the remote control apparatus transmits, according to a user operation, a signal for requesting the pieces of program information altogether to the program selecting apparatus 1200, and in response to this, the program selecting apparatus 1200 transmits all the pieces of program information for the selected programs altogether to the remote control apparatus 1100.
(14) It is also acceptable to record and distribute a computer program on a recording medium or via various communication channels, the computer program being for having the remote control apparatus, the program selecting apparatus and the receiving and recording apparatus, each of which has a CPU, execute the processing steps of the respective apparatus described in the first and the second embodiments (the steps shown in the flow charts in FIGs. 7 to 9 and FIG. 14).

The recording medium may be, for example, an IC card, an optical disc, a flexible disc, or a ROM. The computer program distributed is to serve for use after being installed on those apparatuses including the remote control apparatus with a CPU. The computers or the like execute the computer program so as to perform the processing steps described in the first and second embodiments.

### Industrial Applicability

The program receiving systems and the remote control apparatuses of the present invention are applicable to systems for receiving broadcast.

## Claims

1. A remote control apparatus that wirelessly communicates with a program selecting apparatus which stores therein pieces of reception information each of which is required for reception of a corresponding one of a plurality of programs, displays a program table, and in response to a signal transmitted from the remote control apparatus, either selects one of the plurality of programs or transmits one of the pieces of reception information that corresponds to a selected one of the programs, the remote control apparatus comprising:
a recording medium;
an operation receiving unit operable to receive a user operation from a user;
a selecting unit operable to transmit a selective signal for selecting one of the programs according to the user operation to the program selecting apparatus;
a requesting unit operable to, when a first user operation has been received, transmit, to the program selecting apparatus, a signal for requesting a piece of reception information that corresponds to the selected program;
a reception information receiving unit operable to receive and record, onto the recording medium, the piece of reception information transmitted from the program selecting apparatus; and
a forwarding unit operable to transmit, after a second user operation has been received, the piece of reception information recorded on the recording medium.

2. The remote control apparatus of Claim 1, comprising
a transmitting unit operable to perform a transmission with directivity, wherein
each of the transmissions performed by the selecting unit, the requesting unit, and the forwarding unit is performed via the transmitting unit.

3. The remote control apparatus of Claim 2, wherein
the transmitting unit performs each of the transmissions by transmitting an infrared ray.

4. The remote control apparatus of Claim 2, wherein
the forwarding unit transmits the piece of reception information recorded on the recording medium to a program recording apparatus that is operable to, when having received a piece of reception information, receive and record a program that corresponds to the piece of reception information,
the remote control apparatus further comprises
a signal format storing unit that pre-stores therein signal format information which indicates, in correspondence with pieces of identification information for identifying a plurality of types of program recording apparatuses, a plurality of remote control signal formats which are to be used for a purpose of presetting recording of each program and which the plurality of types of program recording apparatuses are capable of receiving respectively, and
the forwarding unit includes:
an identification information obtaining unit operable to, when the second user operation has been received, transmit, via the transmitting unit, to the program recording apparatus to which the piece of reception information is to be transmitted, a signal for requesting a piece of identification information that identifies a type of the program recording apparatus, and to subsequently receive the piece of identification information from the program recording apparatus;
a signal format specifying unit operable to specify a remote control signal format that corresponds to the type of program recording apparatus identified with the received piece of identification information, based on the signal format information; and
an organizing unit operable to organize the piece of reception information so as to be in the specified remote control signal format and transmit the organized piece of reception information to the program recording apparatus.

5. The remote control apparatus of Claim 4, wherein
the program selecting apparatus receives and stores therein, for each of programs scheduled to be broadcasted, a piece of reception information broadcasted and a piece of program related information broadcasted and made up of items related to the program, and transmits a piece of program related information that corresponds to the selected program in addition to the piece of reception information,
the remote control apparatus further includes a utilized item information storing unit that stores therein utilized item information which indicates, in correspondence with the pieces of identification information, one or more of the items which are within the pieces of program related information and can be utilized by each of the types of program recording apparatuses,
the forwarding unit includes a utilized item specifying unit operable to specify one or more of the items within the pieces of program related information which can be utilized by the type of program recording apparatus identified with the received piece of identification information, based on the utilized item information, and
the organizing unit extracts the one or more specified items out of pieces program related information recorded on the recording medium, organizes the extracted items and the piece of reception information so as to be in the specified remote control signal format, and transmits the organized items and piece of reception information to the program recording apparatus.

6. The remote control apparatus of Claim 2, wherein
the operation receiving unit has an operational button, and
the operation receiving unit regards a detection of the user pushing the operational button as that the first user operation has been received and regards a detection of the operational button becoming unpushed after the detection of a push as that the second user operation has been received.

7. The remote control apparatus of Claim 6, wherein
the remote control apparatus further includes
an informing unit operable to, when the piece of reception information is recorded onto the recording medium by the reception information receiving unit, inform the user that the piece of reception information has been recorded.

8. The remote control apparatus of Claim 2, wherein
every time the first user operation has been received, the requesting unit transmits, to the program selecting apparatus, the signal for requesting a piece of reception information that corresponds to a selected program,
the reception information receiving unit receives and records, onto the recording medium, pieces of reception information that correspond to selected programs respectively and have been transmitted from the program selecting apparatus, and
every time the second user operation has been received, the forwarding unit transmits one of the pieces of reception information recorded on the recording medium.

9. The remote control apparatus of Claim 8, wherein
the remote control apparatus further includes a recorded information displaying unit operable to display part or all of each of the pieces of reception information recorded on the recording medium in such a manner to be grouped in units of programs and arranged in a predetermined order, and
every time the second user operation has been received, the forwarding unit selects and transmits one of the pieces of reception information, according to the predetermined order.

10. The remote control apparatus of Claim 8, wherein
the remote control apparatus further includes:
an option displaying unit operable to display part or all of each of the pieces of reception information recorded on the recording medium as options for selecting one or more of the programs; and
a selection receiving unit operable to receive a selection of one of the options by the user, and
the forwarding unit transmits one of the pieces of reception information that corresponds to the selection that has been received by the selection receiving unit most recently when the second user operation has been received.

11. A program receiving system that includes a program selecting apparatus, a remote control apparatus, and a plurality of receiving apparatuses, wherein
the program selecting apparatus includes:
a reception storing unit operable to receive and store therein pieces of reception information each of which is broadcasted and is required for reception of a corresponding one of a plurality of programs;
a program table displaying unit operable to display a program table based on the received pieces of reception information;
a program selecting unit operable to, when having received from the remote control apparatus, a selective signal for selecting one of the programs, select the one of the programs from the program table according to the selective signal; and
a reception information transmitting unit operable to, when having received a request signal for requesting a piece of reception information from the remote control apparatus, transmit a piece of reception information that corresponds to the selected program to the remote control apparatus,
the remote control apparatus includes:
a recoding medium;
an operation receiving unit operable to receive a user operation from a user;
a selecting unit operable to wirelessly transmit, to the program selecting apparatus, the selective signal for selecting the program according to the user operation;
a requesting unit operable to, when a first user operation has been received, wirelessly transmit, to the program selecting apparatus, the request signal for requesting the piece of reception information that corresponds to the selected program;
a reception information receiving unit operable to receive and record, onto the recording medium, the piece of reception information transmitted from the program selecting apparatus; and
a forwarding unit operable to, after a second user operation has been received, wirelessly transmit to one of the receiving apparatuses, the piece of reception information recorded on the recording medium, and
each of the receiving apparatuses includes a program receiving unit operable to, when having received the piece of reception information from the remote control apparatus, receive a program that based on the piece of reception information.

12. The program receiving system of Claim 11, wherein
the remote control apparatus includes a transmitting unit operable to perform a transmission with directivity by transmitting an infrared ray, and
each of the transmissions performed by the selecting unit, the requesting unit, and the forwarding unit is performed via the transmitting unit.

13. The program receiving system of Claim 12, wherein
the reception storing unit receives and stores therein, for each of programs scheduled to be broadcasted, a piece of reception information and a piece of program related information being made up of items related to the program, and
the reception information transmitting unit transmits a piece of program related information that corresponds to the selected program in addition to the piece of reception information,
each of the receiving apparatuses further includes:
a program recording unit operable to record the program received by the program receiving unit;
an identification information storing unit that pre-stores therein a piece of identification information that shows a type of the receiving apparatus; and
an identification information transmitting unit operable to, when having received from the remote control apparatus a signal for requesting a piece of identification information, transmit the piece of identification information pre-stored in the identification information storing unit to the remote control apparatus,
the remote control apparatus further includes
a type information storing unit that stores therein, (i) signal format information which indicates, in correspondence with pieces of identification information for identifying a plurality of types of receiving apparatuses, a plurality of remote control signal formats which are to be used for a purpose of presetting recording of each program and which the plurality of types of receiving apparatuses are capable of receiving respectively and (ii) utilized item information which indicates, in correspondence with the pieces of identification information, one or more of the items which are within the pieces of program related information and can be utilized by each of the types of receiving apparatus, and
the forwarding unit includes:
an identification information obtaining unit operable to, when the second user operation has been received, transmit, via the transmitting unit, to the receiving apparatus to which the piece of reception information is to be transmitted, a signal for requesting the piece of identification information that identifies a type of the receiving apparatus, and to subsequently receive the piece of identification information from the receiving apparatus;
a signal format specifying unit operable to specify a remote control signal format that corresponds to the type of receiving apparatus identified with the received piece of identification information, based on the signal format information;
a utilized item specifying unit operable to specify one or more of the items within the pieces of program related information which can be utilized by the type of receiving apparatus identified with the received piece of identification information, based on the utilized item information; and
an organizing unit operable to extract the one or more specified items out of the pieces of program related information recorded on the recording medium, organize the extracted items and the piece of reception information so as to be in the specified remote control signal format, and transmit the organized items and piece of reception information to the receiving apparatus.

14. An information forwarding method used by a remote control apparatus operable to wirelessly communicate with a program selecting apparatus that stores therein pieces of reception information each of which is required for reception of a corresponding one of a plurality of programs, displays a program table, and in response to a signal transmitted from the remote control apparatus, either selects one of the plurality of programs or transmits one of the pieces of reception information corresponding to a selected one of the programs, the information forwarding method comprising:
an operation receiving step of receiving a user operation from a user;
a selecting step of transmitting a selective signal for selecting one of the programs according to the user operation to the program selecting apparatus;
a requesting step of, when a first user operation has been received, transmitting, to the program selecting apparatus, a signal for requesting a piece of reception information that corresponds to the selected program;
a reception information receiving step of receiving the piece of reception information transmitted from the program selecting apparatus; and
a forwarding step of transmitting, after a second user operation has been received, the received piece of reception information.

15. A program for making a program selecting apparatus and a remote control apparatus perform an information forwarding processing, the program selecting apparatus being operable to (i) store therein pieces of reception information each of which is required for reception of a corresponding one of a plurality of programs, (ii) display a program table, and (iii) in response to a signal transmitted from the remote control apparatus, either select one of the plurality of programs or transmit one of the pieces of reception information corresponding to a selected one of the programs, and the remote control apparatus being operable to wirelessly communicate with the program selecting apparatus and including a recording medium and a CPU, wherein
the information forwarding processing includes:
an operation receiving step of receiving a user operation from a user;
a selecting step of transmitting a selective signal for selecting one of the plurality of programs according to the user operation to the program selecting apparatus;
a requesting step of, when a first user operation has been received, transmitting, to the program selecting apparatus, a signal for requesting a piece of reception information that corresponds to the selected program;
a reception information receiving step of receiving and recording, onto the recording medium, the piece of reception information transmitted from the program selecting apparatus; and
a forwarding step of transmitting, after a second user operation has been received, the piece of reception information recorded on the recording medium.
